## Europäisches Patentamt

## European Patent Office

## Office européen des brevets

(19)

(11) Veröffentlichungsnummer : **0 102 917**
**B1**

(12) EUROPÄISCHE PATENTSCHRIFT

(45) Veröffentlichungstag der Patentschrift :
22.01.86

(51) Int. Cl.⁴ : **H 02 K   1/30**

(21) Anmeldenummer : 83730076.3

(22) Anmeldetag : 26.07.83

(54) Vertikale elektrische Synchronmaschine grossen Durchmessers.

(30) Priorität : 09.08.82 DE 3229935

(43) Veröffentlichungstag der Anmeldung :
14.03.84 Patentblatt 84/11

(45) Bekanntmachung des Hinweises auf die Patenterteilung : 22.01.86 Patentblatt 86/04

(84) Benannte Vertragsstaaten :
AT CH DE LI SE

(56) Entgegenhaltungen :
DE-A- 2 833 250
US-A- 3 529 193

(73) Patentinhaber : Siemens Aktiengesellschaft
Berlin und München Wittelsbacherplatz 2
D-8000 München 2 (DE)

(72) Erfinder : Spirk, Franz
Schuckertdamm 322
D-1000 Berlin 13 (DE)

**Beschreibung**

Die Erfindung betrifft eine vertikale elektrische Synchronmaschine großen Durchmessers, insbesondere Wasserkraftgenerator, deren Läufer einen Nabenkörper enthält mit längs des Umfanges gleichmäßig verteilt angeordneten Tragbalken, auf denen ein aus zwischen Druckplatten liegenden Segmenten aufgebauter Ringkörper (Blechkette) aufgeschrumpft ist, der die Erregerpole trägt, wobei sich die Blechkette auf an den Tragbalken vorgesehene Auflagflächen abstützt, die an einer äußeren Stirnseite der Druckplatten der Blechkette anliegen.

Eine derartige Synchronmaschine ist aus der DE-A-2 833 250 bekannt. Bei dieser sind die Tragbalken an einem Ende mit Quernuten oder hakenförmigen Fortsätzen versehen, auf welchen die untere Stirnfläche der Blechkette, d. h. die untere Druckplatte, aufliegt. Bei anderen bekannten Ausführungsformen ist die Blechkette mit Schlitzen versehen, in die jeweils ein Ansatz des Tragbalkens hineinragt, so daß dort die Auflagefläche entsteht.

Bei derartigen großen vertikalen Synchronmaschinen erreicht man durch die Steigerung der Maschinenleistung inzwischen so große Abmessungen des Läufers, daß der Nabenkörper nicht mehr einteilig hergestellt oder transportiert werden kann. Deshalb müssen die Teile des Nabenkörpers auf der Baustelle verschweißt werden. Infolge der bei Schweißungen auftretenden Spannungen können an den Auflageflächen der Blechkette durch Schweißverzug Toleranzen in allen drei Raumachsen auftreten. Die Auflageflächen werden uneben, können in radialer Richtung schief stehen oder in Umfangsrichtungen Neigungen aufweisen. Diese Toleranzen können zu erheblichen Abweichungen einer der Vorausberechnung zugrunde liegenden gleichmäßigen Belastung der Auflagefläche führen. Außerdem ist zu berücksichtigen, daß während des Betriebes der elektrischen Synchronmaschine infolge der unterschiedlichen Drehzahlen Relativbewegungen in radialer Richtung zwischen Nabe und Blechkette auftreten. Diese Relativbewegungen bewirken mechanische Wechselbeanspruchungen in der Auflage, die vom Reibungskoeffizienten zwischen der Auflagefläche und der Blechkette abhängig sind.

Der Erfindung liegt die Aufgabe zugrunde, bei einer derartigen vertikalen elektrischen Synchronmaschine großen Durchmessers die Auflageflächen zwischen den Tragbalken und der Blechkette so auszubilden, daß sowohl Toleranzen ausgeglichen als auch ein eindeutiger Reibungskoeffizient sichergestellt werden.

Zur Lösung dieser Aufgabe ist eine vertikale elektrische Synchronmaschine großen Druchmessers der eingangs beschriebenen Art gemäß der Erfindung so ausgebildet, daß an jeder Auflagefläche eine aus mehreren Schichten bestehende Gleitzwischenlage zwischen dem Tragbalken und der Blechkette angeordnet ist, daß diese mittig zwei aufeinander gleitende Bleche hoher mechanischer Festigkeit enthält, auf deren einander zugewandten Oberflächen ein trockenes Schmiermittel fixiert ist, das einen geringen Reibungskoeffizienten sicherstellt, und daß auf beiden äußeren Seiten dieses Blechpaares ein oder mehrere verformungsfähige Bleche angeordnet sind aus einem Material, dessen Fließgrenze deutlich unterhalb der an den Auflageflächen auftretenden Flächenpressungen liegt.

An diesen an den Auflageflächen zwischen den Tragbalken und der Blechkette angeordneten Gleitzwischenlagen, die das Gewicht der Blechkette mit den Erregerpolen aufnehmen, verformen sich bei ungleichen Auflageflächen infolge der ebenfalls ungleichen Flächenpressungen die außenliegenden weichen verformungsfähigen Bleche aufgrund ihrer geringen Festigkeit mit einer deutlich unterhalb der an den Auflageflächen auftretenden Flächenpressungen liegenden Fließgrenze solange plastisch, bis die Toleranzen ausgeglichen sind. Dadurch wird eine angenähert gleichmäßige Lastverteilung auf alle Auflageflächen erzielt. Da außerdem durch die plastische Verformung auch eine Festigkeitserhöhung des Materials auftritt, erhöht sich dadurch auch die Tragfähigkeit. Im wesentlichen ist aber die Tragfähigkeit der Gleitzwischenlagen durch das mittige Blechpaar aus zwei aufeinander gleitenden Blechen hoher mechanischer Festigkeit gegeben, deren Gleitfläche keinen Verformungen unterliegt. Da auf den einander zugewandten Oberflächen dieser Bleche jeweils ein trockenes Schmiermittel fixiert ist, das einen geringen Reibungskoeffizienten sicherstellt, weisen die Gleitzwischenlagen somit einen definierten, niedrigen Reibungskoeffizienten auf, so daß infolge der Relativbewegungen zwischen der Blechkette und den Auflageflächen am Tragbalken keine zu großen Beanspruchungen auftreten.

Es ist besonders vorteilhaft, als trockenes Schmiermittel zwischen dem mittleren Blechpaar der Gleitzwischenlage Molybdän-Disulfid zu verwenden, da dieses einen Reibungskoeffizienten von 0,05 hat. Auch andere Gleitmittel niedrigen Reibungskoeffizienten, wie z. B. Graphit, sind einsetzbar.

Stahlbleche sind für das mittlere Blechpaar gut geeignet. Auf ihnen kann in zweckmäßiger Weise das trockene Schmiermittel, z. B. Molybdän-Disulfid, durch eine Einbrennlackierung fixiert sein.

Als Materialien für die äußeren verformungsfähigen Bleche empfehlen sich weiche Metalle, wie weichgeglühtes Kupfer, Weicheisen oder Blei, die entsprechend der an den Auflageflächen herrschenden Flächenpressungen ausgewählt werden.

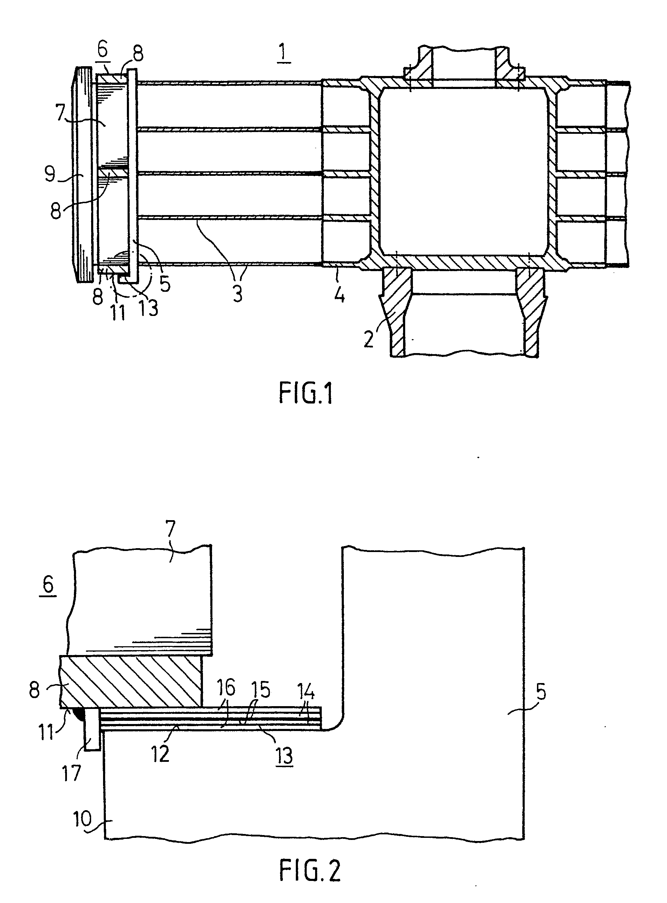

Im folgenden sei die Erfindung noch anhand des in den Fig. 1 und 2 der Zeichnung dargestellten Ausführungsbeispiels näher erläutert. Fig. 1 zeigt einen Teil eines Längsschnitts durch den Läufer einer vertikalen elektrischen Synchronmaschine großen Durchmessers, Fig. 2 zeigt im wesentlich vergrößertem Maßstab den in Fig. 1 durch einen strichpunktierten Kreis markierten Ausschnitt dieses Läufers.

Im Läufer 1 einer elektrischen Synchronmaschine, eines Wasserkraftgenerators großen Durchmessers mit vertikaler Rohrwelle 2 tragen die Arme 3 des Nabenkörpers 4 längs ihres Umfanges gleichmäßig verteilt angeordnete Tragbalken 5. Auf diesen Tragbalken 5 ist die Blechkette 6 aufgeschrumpft, deren Blechsegmente 7 zwischen Druckplatten 8 zusammengepreßt sind. Die Blechkette 6 trägt ihrerseits die Erregerpole 9. Die Tragbalken 5 sind einseitig mit hakenförmigen, sich in radialer Richtung erstreckenden Ansätzen 10 versehen, die unter die untere Stirnfläche 11 der Blechkete 6 greifen und auf ihrer der unteren Druckplatte 8 zugewandtern Oberfläche die Auflageflächen 12 bilden, über die das Gewicht der Blechkette 6 mit den Erregerpolen 9 aufgenommen wird.

An diesen Auflageflächen 12 ist jeweils eine mehrschichtige Gleitzwischenlage 13 zwischen dem Tragbalken 5 und der Blechkette 6 angeordnet. Die Gleitzwischenlage 13 enthält mittig ein Paar aus zwei aufeinander gleitenden Blechen 14 hoher mechanischer Festigkeit, z. B. aus Stahl, auf deren einander zugewandten Oberflächen 15 ein trockenes Schmiermittel mit einem geringen Reibungskoeffizienten fixiert ist. Als Schmiermittel ist Molybdän-Disulfid verwendet, das auf den Oberflächen 15 der Bleche 14 aus Stahl durch eine Einbrennlackierung auf Dauer fixiert ist. Weiterhin sind auf den beiden äußeren Seiten dieses Blechpaares 13 je ein Blech 16 aus einem weichen, verformungsfähigen Material angeordnet, dessen Fließgrenze deutlich unterhalb der an den Auflageflächen 12 auftretenden Flächenpressungen liegt. Ein Sicherungsteil 17 liegt radial außen vor der Gleitzwischenlage 13, das mit der Druckplatte 8 verbunden ist und verhindert, daß die Gleitzwischenlage 13 durch die Fliehkraftbeanspruchung während des Betriebes der Synchronmaschine herausgeschleudert wird.

Da es sich um einen Wasserkraftgenerator sehr großen Durchmessers handelt, kann der Nabenkörper 4 nicht mehr einteilig hergestellt und transportiert werden. Er ist deshalb im Herstellungswerk sowohl längs des Umfanges als auch in radialer Richtung in mehrere Teile unterteilt, die auf der Baustelle zusammengeschweißt werden. Dadurch können an den Auflageflächen 12 Toleranzen auftreten, die zu einer unterschiedlichen Verteilung des Gewichtes der Blechkette 6 mit den Erregerpolen 7 auf die einzelnen Auflageflächen 12 führt, so daß sich dort entsprechend unterschiedlich große Flächenpressungen einstellen. Da diese Flächenpressungen größer als die Fließgrenze des weichen verformungsfähigen Materials der äußeren Bleche 16 ist, verformen diese sich entsprechend plastisch, bis die Toleranzen ausgeglichen sind. Dadurch erhält dann jede Auflagefläche 12 wieder eine gleichmäßige Belastung, wie sie den Vorausberechnungen zugrunde lag. Da außerdem das mittlere Paar der Bleche 14 auf den einander zugewandten Oberflächen 15 mit einem trockenen Schmiermittel von geringem Reibungskoeffizient versehen ist, gleiten diese beiden Bleche bei den während des Betriebes des Wasserkraftgenerators gegebenen Aufweitungen bzw. Zusammenziehungen der Blechkette 6 aufeinander. Dabei ist für diese Relativbewegungen sichergestellt, daß der Reibungskoeffizient der aufeinander gleitenden Flächen gering ist. Entsprechend werden die bei diesen Relativbewegungen auf den Tragbalken einwirkenden mechanischen Wechselbeanspruchungen gering gehalten.

**Patentansprüche**

1. Vertikale elektrische Synchronmaschine großen Druchmessers, insbesondere Wasserkraftgenerator, deren Läufer (1) einen Nabenkörper (4) enthält mit längs des Umfanges gleichmäßig verteilt angeordneten Tragbalken (5), auf denen ein aus zwischen Druckplatten (8) liegenden Segmenten (7) aufgebauter Ringkörper (Blechkette) (6) aufgeschrumpft ist, der die Erregerpole (9) trägt, wobei sich die Blechkette (6) auf an den Tragbalken (5) vorgesehenen Auflageflächen abstützt, die an einer äußeren Stirnseite der Druckplatten der Blechkette anliegen, dadurch gekennzeichnet, daß an jeder Auflagefläche (12) eine aus mehreren Schichten bestehende Gleitzwischenlage (13) zwischen dem Tragbalken (5) und der Blechkette (6) angeordnet ist, daß diese mittig zwei aufeinander gleitende Bleche (14) hoher mechanischer Festigkeit enthält, auf deren einander zugewandten Oberflächen (15) ein trockenes Schmiermittel fixiert ist, das einen geringen Reibungskoeffizienten sicherstellt, und daß auf beiden äußeren Seiten dieses Blechpaares (14) ein oder mehrere verformungsfähige Bleche (16) angeordnet sind aus einem Material, dessen Fließgrenze deutlich unterhalb der an den Auflageflächen (12) auftretenden Flächenpressungen liegt.

2. Vertikale elektrische Synchronmaschine nach Anspruch 1, dadurch gekennzeichnet, daß als trockenes Schmiermittel zwischen dem mittleren Blechpaar (14) Molybdän-Disulfid verwendet ist.

3. Vertikale elektrische Synchronmaschine nach Anspruch 1, dadurch gekennzeichnet, daß das Molybdän-Disulfid auf der Oberfläche (15) von Blechen (14) aus Stahl durch Einbrennlackierung fixiert ist.

4. Vertikale elektrische Synchronmaschine nach Anspruch 1 oder 3, dadurch gekennzeichnet, daß die äußeren Bleche (16) aus weichgeglühtem Kupfer bestehen.

5. Vertikale elektrische Synchronmaschine nach Anspruch 1 oder 3, dadurch gekennzeichnet, daß die äußeren Bleche (16) aus Weicheisen bestehen.

## Claims

1. A vertical electric synchronous machine having a large diameter, in particular a waterwheel generator, whose rotor (1) comprises a hub body (4) with supporting beams (5) which are evenly distributed along the periphery and onto which an annular body (sheet chain) (6) consisting of segments (7) arranged between pressure plates (8) is shrink fitted, and which annular body supports the excitation poles (9), where the sheet chain (6) is supported on contact surfaces arranged on the supporting beams (5) and which abut on an outer face of the pressure plates of the sheet chain, characterised in that on each contact surface (12) there is a sliding intermediate layer (13), which consists of a plurality of layers arranged between the supporting beam (5) and the sheet chain (6), that the sliding intermediate layer centrally comprises two sheets (14) of high mechanical resistance which slide on one another and on whose mutually faced surfaces (15) is fixed a dry lubricant which ensures a low friction coefficient and that on the outer sides of the sheet pair (14) are arranged one or more deformable sheets (16) consisting of a material whose flow limit clearly lies below the surface pressures which occur on the contact surfaces.

2. A vertical electric synchronous machine as claimed in Claim 1, characterised in that molybdenumdisulfide is used as a dry lubricant between the central sheet pair (14).

3. A vertical electric synchronous machine as claimed in Claim 1, characterised in that the molybdenum-disulfide is fixed on the surface (15) of sheets (14) made of steel by stove-enamelling.

4. A vertical electric synchronous machine as claimed in Claim 1 or 3, characterised in that the outer sheets (16) consist of soft-annealed copper.

5. A vertical electric synchronous machine as claimed in Claim 1 or 3, characterised in that the outer sheets (16) consist of soft iron.

## Revendications

1. Machine électrique synchrone du type vertical et de grand diamètre, en particulier génératrice hydro-électrique, dont le rotor (1) comporte un corps de moyeu (4) avec des poutres de support (5) disposées suivant une répartition uniforme le long de la périphérie, et sur lesquelles est fritté à chaud un corps annulaire (jante feuilletée) (6) constitué par des segments (7) situés entre des plaques de pression (8) et portant les poles d'excitation (9), la jante feuilletée (6) portant contre des surfaces d'appui prévues sur les poutres de support (5) et venant porter contre un côté frontal extérieur des plaques de pression de la jante feuilletée, caractérisée par le fait que sur chaque surface d'appui (12) est disposée, entre la poutre de support (5) et la jante feuilletée (6), une couche intermédiaire de glissement (13), que celle-ci comporte, en position médiane deux tôles (14) qui glissent l'une sur l'autre et qui possèdent une résistance mécanique élevée, lesdites tôles portant sur leurs surfaces (15) qui se font face une matière lubrifiante, sèche qui assure un coefficient de friction faible, que sur les deux côtés de cette paire de tôles (14) sont disposées une ou plusieurs tôles déformables (16), faites avec une matière dont la limite de fluage se situe nettement en dessous des pressions superficielles qui apparaissent au niveau des surfaces d'appui (12).

2. Machine électrique synchrone du type vertical selon la revendication 1, caractérisée par le fait que l'on utilise, comme matière lubrifiante, sèche, entre la paire de tôles médiane (14) du bisulfure de molybdène.

3. Machine électrique synchrone du type vertical selon la revendication 1, caractérisée par le fait que le bisulfure de molybdène est fixé sur la surface (15) de tôles (14) en acier par vernissage à la cuisson.

4. Machine électrique synchrone du type vertical selon la revendication 1 ou 3, caractérisée par le fait que les tôles extérieures (16) sont constituées en cuivre à recuit doux.

5. Machine électrique synchrone du type vertical selon la revendication 1 ou 3, caractérisée par le fait que les tôles extérieures (16) sont en fer doux.

FIG.1

FIG.2